# EUROPEAN PATENT SPECIFICATION

(11) **EP 3 852 594 B1**
(45) Date of publication and mention of the grant of the patent: **14.02.2024**
(21) Application number: 19862468.6
(22) Date of filing: 03.09.2019
(51) Int. Cl.: A47L 9/20, B01D 46/00, B01D 46/42, A47L 5/00, B08B 5/04, A47L 9/12, A47L 9/28

(54) **VACUUM, CLEANER**
STAUBSAUGER
ASPIRATEUR

(30) Priority: 21.09.2018 FI 20187136
(43) Date of publication of application: 28.07.2021
(73) Proprietor: Ollila, Martti, 00740 Helsinki (FI)
(72) Inventor: Ollila, Martti, 00740 Helsinki (FI)
(74) Representative: Papula Oy
(86) International application number: PCT/FI2019/000016
(87) International publication number: WO 2020/058564

(56) References cited:
- EP-A1- 1 997 415
- EP-A1- 2 421 630
- EP-A1- 2 533 677
- KR-B1- 101 833 162
- US-A1- 2011 226 130
- US-B1- 8 516 654
- US-B1- 8 516 654
- US-B2- 9 220 387

## Description

This invention relates to a vacuum cleaner, which consists of a dust container containing filters with respective different flows, and above these an air control space containing control housings, and above these a central housing and an underpressure space, and above this a suction unit and the suction unit engine, all these spaces being in mutual communication.

US 8 516 654 discloses a vacuum cleaner according to the preamble of claim 1.

The purpose of the invention is to provide a vacuum cleaner of a new type, in which the filters can be cleaned with the desired effect even while the vacuum cleaner is in operation.

The vacuum cleaner of the invention is characterised in that the control space contains control valves for the air flow, by means of which the air flow in ordinary use is directed through the suction opening in the dust container to the exhaust air opening in the suction unit, in the manner indicated by the arrows, and in that the control valves have closing means, which, by opening one valve to the outside air and closing the other valve, directs the air flow in the dust container under underpressure in the filter partly from the normal flow direction into the opposite flow direction.

The filters of the vacuum cleaner are automatically cleaned, yielding a better result than manual cleaning. Using the vacuum cleaner is reasonable in terms of ecology, since the use of clean filters reduces the energy consumption and disposable filters can be abandoned. The use of the vacuum cleaner makes cleaning easier. Clean filters are crucial in terms of the operation of the vacuum cleaner. In ordinary use of the vacuum cleaner, the filters are gradually clogged and become less serviceable, and eventually practically inoperative when used over a long period of time. The vacuum cleaner of the invention has automatic operation and continuous alternate cleaning of the filters, so that the filters are never clogged and remain clean. A vacuum cleaner requires at least two filters and at least one dust container. The cleaning effect is proportional to the amount of opposite air reaching the filter. When maximum cleaning performance is desired for the filter, the entire air flow within the vacuum cleaner is directed at the cleaning stage to one single filter with opposite flow.

In this exemplifying case, part of the air flow of four filters is directed to the cleaning of one filter, whereby the amount of air relative to the filter area is multiplied at the cleaning stage compared to ordinary vacuum cleaning. When the suction opening of the dust container is completely closed, the air flow in its totality is directed to the cleaning of the filters.

The desired cleaning effect can be defined with regard to the purpose of use and the requirements. The cleaning controls of the vacuum cleaner can be manually used if necessary, or they can be programmed with the cleaning function starting automatically by electric means or starting under the joint effect of the suction air, underpressure and pressure differences in the air. The cleaning effect of the vacuum cleaner is determined by the cleaning time and the division of the air quantity in the vacuum cleaner for different functions. One single filter can be cleaned, and then the cleaning efficiency is maximal. On the other hand, if the air available for cleaning the filers is divided between several filters in the vacuum cleaner, the cleaning efficiency per filter will be reduced. The cleaning efficiency can be raised without increasing the power of the suction engine by increasing the number of filters and control housings per filter. At the same time, the filter area is kept constant. In practical operation, this involves reducing the size of the filters. The cleaning of the filters takes a few seconds for each filter. Unlike previous vacuum cleaners, this vacuum cleaner has the advantage of allowing cleaning of the filters while the vacuum cleaner is being used. The vacuum cleaner has the additional advantage of providing high cleaning performance for each filter owing to the fact that the vacuum cleaner has a separate flow tunnel and a separate closing means controlling the air flow for each of the filters. Up till now, problems have been caused by the fact that existing vacuum cleaners have not yielded the desired cleaning result due to the lack of sufficiently effective means for cleaning the filters.

The invention is described below by means of an example with reference to the accompanying drawings, which show vacuum cleaner in section. In the figures, filters 2 and the control housings 3 of the vacuum cleaner are aligned. However, in reality, they form 90° sectors which describe the cylindrical periphery of the vacuum cleaner in section.

The vacuum cleaner consists of a dust container 1 containing filters 2, and above these a control space 3 including control housings 3a, 3b, 3c, 3d and above these a central housing 4 and an underpressure space, and above this a suction unit 5 and the suction unit engine 6. Said spaces 1, 3, 4, 5 intercommunicate. Control space 3 contains control valves 7, 8 for the air flow, by means of which, in ordinary use, the air flow is directed through a partly or completely closable suction opening 9 in the dust container 1 to an exhaust air opening 10 in dust container 1, indicated by arrows 9a, 9b, 9c, the control valves having closing means, which, by opening valve 7a to the outside air and closing valve 8a, directs the air flow in the dust container under underpressure in the filter partly from the normal flow direction 9a, 9b, 9c into the opposite flow direction 11.

If the air opening in the dust container 9 closes/is closed momentarily, the air flows to the filter cleaning in its totality. The closing valves 7 and 8, for instance, are closed by means of springs, and should the suction opening 9 of the container be closed under underpressure, valve 7 opens and valve 8 closes. When the suction opening of the dust container is opened, the underpressure prevailing in the space sinks and the springs return closing valves 7 and 8 to their normal position.

An electric control sensor is also activated by underpressure. If one single filter at a time is cleaned, the foulest filter is each time selected for cleaning under the effect of underpressure, given that the most clogged filter generates the highest underpressure in the control housing. The filter is cleaned and the dust sinks into dust container 1.

The location of suction unit 5 is not necessarily immediately above the central housing 4, but may as well be anywhere else, and the unit can be connected to the central housing 4 with a hose or a pipe. Control housing 3 may also be located outside the control space, provided that it can be connected to the control space with a pipe or a hose or in any other manner.

The exhaust air opening 10 can be connected to valve 7a, for instance, which has underpressure, and thus regular and controlled air circulation is achieved.

To replace any external connection, closable by-pass tunnels 12 (indicated by a broken line) can also be mounted between suction unit 5 and the control housings, as described above. This prevents pollution or dust from entering the filters from the outside foul and/or dusty air. Filtered and clean air circulates inside the vacuum cleaner. At the same time, suction opening 9 is kept partly or completely closed.

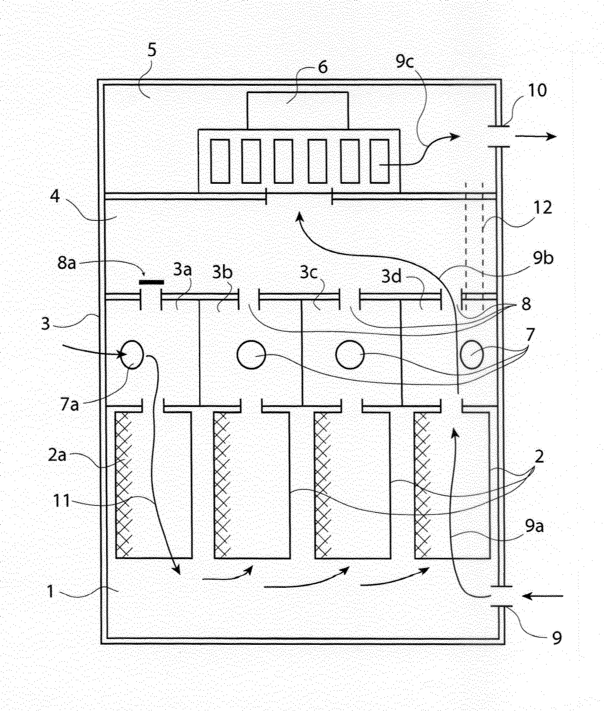

## Claims

1. Vacuum cleaner, which comprises a dust container (1), containing filters (2) with respective different air flows, a central housing (4) with an underpressure space, a suction unit (5) and a suction unit engine (6), a suction opening (9) and an exhaust air opening (10), the dust container (1), the central housing (4) and the suction unit (5) being in mutual connection, **characterised in that** each filter (2) is connected to a control housing (3a, 3b, 3c, 3d) and each control housing (3a, 3b, 3c, 3d) comprises a first control valve (7) and a second control valve (8), by means of which valves (7, 8), in ordinary use, the air flow is directed from the suction opening (9) through the filters (2) to the exhaust air opening (10), and **in that** the control valves (7, 8) comprise closing means, which, by opening the first control valve (7a) of one or more control housing(s) (3a) to the outside air and by closing the second valve (8a) of the same control housing(s) (3a), direct the air flow in the dust container (1) through the filter(s) (2a) in connection with said control housing(s) (3a) under underpressure to the opposite flow direction (11) compared to the normal flow direction (9a, 9b, 9c).

2. Vacuum cleaner as defined in claim 1, **characterised in that** the suction opening (9) is arranged to be adjusted, or completely closed as necessary when the filters (2) are cleaned with an inner air flow using the by-pass tunnels (12).

3. Vacuum cleaner as defined in claim 1 or 2, **characterised in that** the control valves (7, 8) are arranged to be controlled manually, electrically or under underpressure prevailing in the vacuum cleaner.

4. Vacuum cleaner as defined in claim 1, 2 or 3, **characterised in that** one or more filters (2a) are arranged to be cleaned at a time by opening the first control valve(s) (7a) and closing the second control valve(s) (8a) of the control housing(s) (3a) connected to the filter(s) (2a).

5. Vacuum cleaner as defined in any of the claims above, **characterised in that** the filters (2) are arranged to be cleaned while the vacuum cleaner is in operation.

6. Vacuum cleaner as defined in any of the claims above, **characterised in that** the vacuum cleaner comprises a sensor which is arranged to be activated by underpressure in the control housings (3a-3d) of the filters (2).

7. Vacuum cleaner as defined in any of the claims above , **characterised in that** the vacuum cleaner comprises an automatic operation and continuous, adjustable and alternate cleaning of the filters (2).

8. Vacuum cleaner as defined in any of the claims above, **characterised in that** the filter (2) which generates the highest underpressure in the control housing (3a-3d) is selected each time for cleaning.

## Patentansprüche

1. Staubsauger, der einen Staubbehälter (1) umfasst, umfassend Filter (2) mit jeweiligen verschiedenen Luftströmungen, ein zentrales Gehäuse (4) mit einem Unterdruckraum, eine Saugeinheit (5) und einen Saugeinheitsmotor (6), eine Saugöffnung (9) und eine Auslassluftöffnung (10), wobei der Staubbehälter (1), das zentrale Gehäuse (4) und die Saugeinheit (5) in wechselseitiger Verbindung sind, **dadurch gekennzeichnet, dass** jeder Filter (2) mit einem Steuergehäuse (3a, 3b, 3c, 3d) verbunden ist, und jedes Steuergehäuse (3a, 3b, 3c, 3d) ein erstes Steuerventil (7) und ein zweites Steuerventil (8) umfasst, mittels welcher Ventile (7, 8) im regulären Gebrauch die Luftströmung von der Saugöffnung (9) durch die Filter (2) zu der Auslassluftöffnung (10) geleitet wird, und dass die Steuerventile (7, 8) Schließmittel umfassen, die durch Öffnen des ersten Steuerventils (7a) von einem oder mehr Steuergehäuse(n) (3a) zur Außenluft und durch Schließen des zweiten Ventils (8a) des (der) gleiche(n) Steuergehäuse(s) (3a) die Luftströmung in den Staubbehälter (1) durch den/die Filter (2a) in Verbindung mit dem/den Steuergehäuse(n) (3a) unter Unterdruck zu der entgegengesetzten Strömungsrichtung (11) verglichen mit der normalen Strömungsrichtung (9a, 9b, 9c) leiten.

2. Staubsauger wie in Anspruch 1 definiert, **dadurch gekennzeichnet, dass** die Saugöffnung (9) dazu ausgelegt ist, je nach Erfordernissen angepasst oder vollständig geschlossen zu sein, wenn die Filter (2) mit einer inneren Luftströmung unter Verwendung des Umgehungstunnels (12) gereinigt werden.

3. Staubsauber wie in Anspruch 1 oder 2 definiert, **dadurch gekennzeichnet, dass** die Steuerventile (7, 8) dazu ausgelegt sind, manuell, elektrisch oder unter einem in dem Staubsauger herrschenden Unterdruck gesteuert zu werden.

4. Staubsauber wie in Anspruch 1, 2 oder 3 definiert, **dadurch gekennzeichnet, dass** ein oder mehr Filter (2a) dazu ausgelegt sind, gleichzeitig gereinigt zu werden durch Öffnen des/der ersten Steuerventils/Steuerventile (7a) und Schließen des/der zweiten Steuerventils/Steuerventile (8a) des/der Steuergehäuse(s) (3a), das/die mit dem/den Filtern(n) (2a) verbunden ist/sind.

5. Staubsauber wie in einem der vorhergehenden Ansprüche definiert, **dadurch gekennzeichnet, dass** die Filter (2) dazu ausgelegt sind, gereinigt zu werden, während der Staubsauber in Betrieb ist.

6. Staubsauber wie in einem der vorhergehenden Ansprüche definiert, **dadurch gekennzeichnet, dass** der Staubsauger einen Sensor umfasst, der dazu ausgelegt ist, mittels Unterdruck in den Steuergehäusen (3a-3d) der Filter (2) aktiviert zu werden.

7. Staubsauber wie in einem der vorhergehenden Ansprüche definiert, **dadurch gekennzeichnet, dass** der Staubsauger einen automatischen Betrieb und eine kontinuierliche, einstellbare und alternierende Reinigung der Filter (2) umfasst.

8. Staubsauber wie in einem der vorhergehenden Ansprüche definiert, **dadurch gekennzeichnet, dass** der Filter (2), der den höchsten Unterdruck in dem Steuergehäuse (3a-3d) erzeugt, jedes Mal für die Reinigung ausgewählt wird.

## Revendications

1. Aspirateur, qui comprend un récipient à poussière (1), contenant des filtres (2) avec des écoulements d'air respectifs différents, un logement central (4) avec un espace de dépression, une unité d'aspiration (5) et un moteur d'unité d'aspiration (6), une ouverture d'aspiration (9) et une ouverture d'air d'échappement (10), le récipient à poussière (1), le logement central (4) et l'unité d'aspiration (5) étant reliés mutuellement, **caractérisé en ce que** chaque filtre (2) est relié à un logement de commande (3a, 3b, 3c, 3d) et chaque logement de commande (3a, 3b, 3c, 3d) comprend une première valve de commande (7) et une seconde valve de commande (8), valves (7, 8) au moyen desquelles, en utilisation ordinaire, l'écoulement d'air est dirigé de l'ouverture d'aspiration (9) à travers les filtres (2) vers l'ouverture d'air d'échappement (10), et **en ce que** les valves de commande (7, 8) comprennent des moyens de fermeture qui, par l'intermédiaire d'une ouverture de la première valve de commande (7a) d'un ou plusieurs logements de commande (3a) à l'air extérieur et par l'intermédiaire d'une ouverture de la seconde valve (8a) du ou des même(s) logement(s) de commande (3a), dirigent l'écoulement d'air dans le récipient à poussière (1) à travers le ou les filtre(s) (2a) en lien avec ledit ou lesdits logement(s) de commande (3a) sous dépression dans la direction d'écoulement opposée (11) par comparaison à la direction d'écoulement normale (9a, 9b, 9c).

2. Aspirateur selon la revendication 1, **caractérisé en ce que** l'ouverture d'aspiration (9) est agencée pour être ajustée, ou complètement fermée si nécessaire lorsque les filtres (2) sont nettoyés avec un écoulement d'air intérieur en utilisant les tunnels de dérivation (12).

3. Aspirateur selon la revendication 1 ou 2, **caractérisé en ce que** les valves de commande (7, 8) sont agencées pour être commandées manuellement, électriquement ou sous la dépression régnant dans l'aspirateur.

4. Aspirateur selon la revendication 1, 2 ou 3, **caractérisé en ce qu'**un ou plusieurs filtres (2a) sont agencés pour être nettoyés à la fois en ouvrant la ou les premières valve(s) de commande (7a) et en fermant la ou les secondes valve(s) de commande (8a) du ou des logement(s) de commande (3a) relié(s) au ou aux filtre(s) (2a).

5. Aspirateur selon l'une quelconque des revendications précédentes, **caractérisé en ce que** les filtres (2) sont agencés pour être nettoyés pendant que l'aspirateur est en fonctionnement.

6. Aspirateur selon l'une quelconque des revendications précédentes, **caractérisé en ce que** l'aspirateur comprend un capteur qui est agencé pour être activé par une dépression dans les logements de commande (3a-3d) des filtres (2).

7. Aspirateur selon l'une quelconque des revendications précédentes, **caractérisé en ce que** l'aspirateur comprend un fonctionnement automatique et un nettoyage continu, ajustable et alterné des filtres (2).

8. Aspirateur selon l'une quelconque des revendications précédentes, **caractérisé en ce que** le filtre (2) qui génère la dépression la plus élevée dans le logement de commande (3a-3d) est choisi à chaque fois pour nettoyage.
